# DEMANDE DE BREVET EUROPEEN

(11) **EP 2 050 597 A1**
(43) Date de publication de la demande: **22.04.2009**
(21) Numéro de dépôt: 08165784.3
(22) Date de dépôt: 02.10.2008
(51) Int. Cl.: B60G 21/055, B62D 21/11, B62D 27/06

(54) **Fixation de barre anti-devers sur un train de véhicule automobile**

(30) Priorité: 15.10.2007 FR 0758303
(71) Demandeur: PEUGEOT CITROËN AUTOMOBILES S.A., 78140 Vélizy Villacoublay (FR)
(72) Inventeur: Fauconnier, Jérôme, 70200 Frédéric-Fontaine (FR)

(57) **Abrégé**

Berceau fixé à l'avant d'une caisse d'un véhicule automobile, supportant un groupe motopropulseur, des éléments de suspension (6,10) pour les roues avant du véhicule, et une barre anti-dévers (30) comportant une partie centrale (32) transversale formant une barre de torsion, fixée par ses extrémités au berceau (1) par des paliers (34), et des parties latérales (36) liées aux éléments de suspension des roues avant, le berceau étant relié à la caisse par des moyens de fixation arrière (2), et de chaque côté du berceau par deux moyens de fixation avant (4), **caractérisé en ce que** chaque moyen de fixation avant (4) est rapporté sur la face supérieure du berceau, et forme une chape qui recouvre et bride un palier (34) de la barre anti-devers (30).

## Description

La présente invention concerne une barre anti-devers de train avant pour véhicule automobile.

Les véhicules automobiles à moteur placé transversalement à l'avant, comportent généralement un châssis avant fixé sur la caisse, appelé berceau avant, supportant le groupe motopropulseur composé du moteur et de la boîte de vitesses, et assurant les liaisons avec les roues avant du véhicule.

Ce berceau supporte généralement une barre anti-dévers comportant une partie centrale transversale fixée par ses extrémités au berceau par des paliers, et des parties latérales formant un coude, dont les extrémités sont liées aux supports des roues avant par des liaisons pivotantes.

La barre anti-devers à pour fonction de lier entre eux les débattements des roues avant par un ressort constitué par la partie centrale de la barre fixée entre les deux paliers, qui forme une barre de torsion, pour limiter les débattements relatifs des suspensions avant et ainsi notamment réduire les inclinaisons latérales du véhicule, en particulier dans les virages.

Une barre anti-devers de ce type est décrite dans le document EP-B1-0631891. Il présente une barre anti-devers fixée sur un véhicule par des paliers disposés vers l'avant du véhicule, cette barre anti-devers comportant de plus un dispositif de réglage de sa contrainte en torsion.

Toutefois, un certain nombre d'organes sont regroupés dans le compartiment avant et lui sont rattachés en occupant différents espaces, notamment le moteur et son dispositif d'échappement, la boîte de vitesses, les arbres de transmission entraînant les roues, le mécanisme de direction comprenant une crémaillère et un moteur d'assistance, les bras de suspension et la barre anti-dévers, ce qui peut poser des problèmes d'encombrement.

De plus sur cet exemple la barre anti-devers est placée en avant des roues du véhicule, sous le berceau, ce qui constitue une disposition peu compact.

Dans le cas d'un véhicule comportant un berceau disposé en partie basse, il faut aussi prévoir au dessus du berceau des moyens de fixation avec la caisse du véhicule, ces moyens occupant un espace supplémentaire.

En particulier dans le cas d'une barre anti-devers placée au dessus du berceau, on a des difficultés à prévoir sur un véhicule compact, le passage transversal de la barre anti-dévers ainsi que le logement de ses deux paliers, alors que les fixations avant du berceau sur la caisse se trouvent sensiblement dans la même zone.

De plus, les supports des paliers de la barre anti-dévers et les fixations du berceau sur la caisse constituent deux fonctions indépendantes, ce qui représente un coût assez élevé.

La présente invention a notamment pour but d'éviter ces inconvénients de la technique antérieure et d'apporter à la réalisation d'un berceau avant de véhicule automobile comportant une barre anti-devers, une solution simple, efficace, économique et compacte.

Elle propose à cet effet un berceau fixé à l'avant d'une caisse d'un véhicule automobile, supportant un groupe motopropulseur, des éléments de suspension pour les roues avant du véhicule, et une barre anti-dévers comportant une partie centrale transversale formant une barre de torsion, fixée par ses extrémités au berceau par des paliers, et des parties latérales liées aux éléments de suspension des roues avant, le berceau étant relié à la caisse par des moyens de fixation arrière, et de chaque côté du berceau par deux moyens de fixation avant, caractérisé en ce que chaque moyen de fixation avant est rapporté sur la face supérieure du berceau, et forme une chape qui recouvre et bride un palier de la barre anti-devers.

Un avantage essentiel du berceau selon l'invention est que la barre anti-devers peut passer à l'intérieur des moyens de fixation avant du berceau, ce qui permet de réduire l'encombrement.

De plus, le berceau selon l'invention peut comporter une ou plusieurs des caractéristiques suivantes qui peuvent être combinées entre elles.

Avantageusement, le moyen de fixation avant formant une chape comporte des fixations au berceau réparties de part et d'autre de la barre anti-devers.

Le palier peut comporter une coquille comprenant un perçage transversal de guidage de la barre anti-dévers, et dont le contour extérieur comporte une base plane d'appui sur le berceau, et une surface supérieure cintrée.

Suivant une caractéristique de l'invention, le moyen de fixation avant possède une partie principale formant un bras comprenant une base plane qui comporte deux zones réparties de part et d'autre de la barre anti-dévers, et fixées sur une face supérieure du berceau par des vis de fixation, cette partie principale comprenant de plus un contour intérieur entre ces deux zones s'ajustant sur la surface supérieure cintrée du palier.

Avantageusement, le bras de fixation est formé de tôles embouties.

Le bras de fixation peut comporter à son extrémité supérieure, une forme recevant suivant un axe sensiblement vertical une vis de fixation sur la caisse du véhicule.

L'axe de la vis verticale de fixation sur la caisse peut se trouver suivant une direction longitudinale, sensiblement au même niveau que l'axe du palier de la barre anti-dévers.

Avantageusement on a longitudinalement, successivement en partant de l'avant, un arbre de transmission lié à une roue avant, le bras de fixation disposé sensiblement transversalement et contenant le palier de la barre anti-dévers, et une crémaillère de direction disposée juste derrière.

L'invention sera mieux comprise et d'autres caractéristiques et avantages apparaîtront plus clairement à la lecture de la description ci-après donnée à titre d'exemple en référence aux dessins annexés dans lesquels :
- la figure 1 est une vue en perspective d'un berceau avant selon l'art antérieur, comprenant des équipements ;
- la figure 2 est une vue en perspective d'une fixation avant d'un berceau selon l'art antérieur ;
- la figure 3 est une vue de dessus partielle du berceau avant ;
- la figure 4 est une vue en coupe du berceau, suivant un plan IV-IV ;
- la figure 5 est une vue en perspective d'une fixation avant selon l'invention ;
- la figure 6 est une vue en coupe partielle suivant un plan VI-VI, du berceau ;
- la figure 7 est une vue de dessus partielle de ce berceau ; et
- la figure 8 présente en perspective l'intégration de la fixation avant du berceau présenté figure 5, dans son entourage.

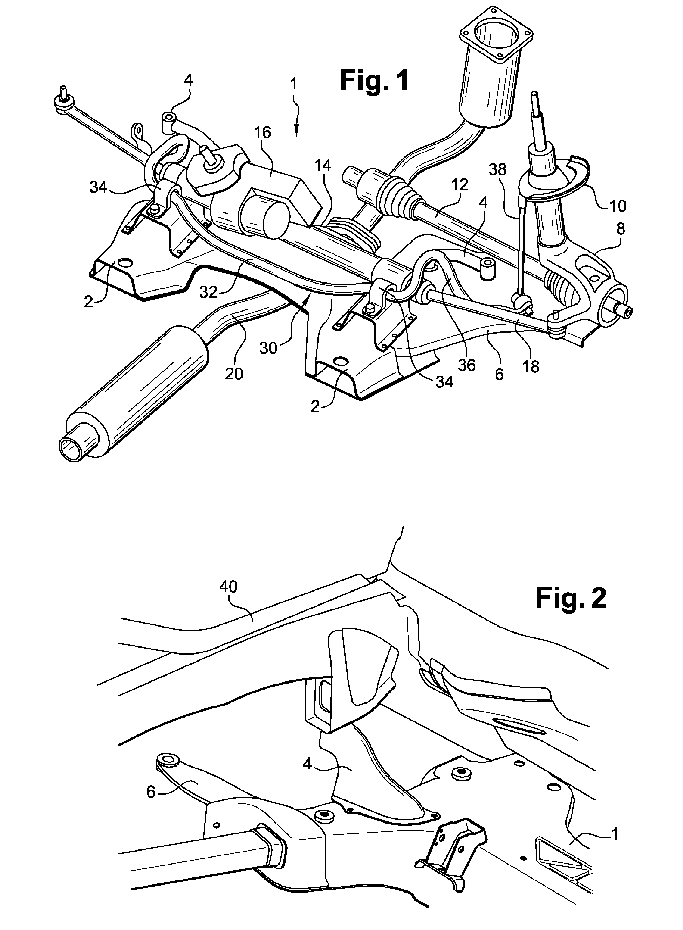

La figure 1 représente un berceau avant 1 d'un véhicule, comportant de chaque côté, une fixation arrière 2 et une fixation avant 4 comprenant un bras en forme de corne, remontant sur le dessus du berceau. Le berceau comprend aussi des bras de suspension 6 qui, en association avec un amortisseur 10 lié à la caisse, maintient et guide un moyeu 8 de roue avant. Des arbres de roues 12 transmettent le mouvement du groupe motopropulseur aux roues avant motrices.

Une crémaillère de direction 14 recevant un moteur 16 d'assistance, est fixée sur le berceau 1, elle transmet son mouvement aux moyeux des roues 8 par des biellettes 18 montées sur des rotules. Un pot d'échappement 20 passant sous le berceau 1, assure l'évacuation des gaz brûlés du moteur thermique.

Le berceau 1 comporte de plus une barre anti-dévers 30 pleine et de section circulaire, comprenant une partie centrale transversale 32 légèrement cintrée, fixée par ses extrémités au berceau 1 par des paliers pivotants 34, et des parties latérales 36 dépassant vers l'extérieur des paliers, qui comportent différentes courbures pour contourner les extrémités de la crémaillère de direction 14. L'extrémité libre des parties latérales 36 est reliée aux amortisseurs 10 par une biellette de liaison 38 montée sur des rotules de liaison.

La différence de mouvement d'oscillation entre les suspensions 10 des roues avant, applique par les biellettes de liaison 38 un couple de torsion sur la partie centrale 32 de la barre anti-dévers 30, qui est maintenue en place par ses paliers 34. En réaction, ce couple de torsion exerce un rappel sur le mouvement des roues, qui tend à limiter leur différence de mouvement.

La figure 2 présente en détail une fixation avant 4 de berceau 1, formant un bras lié à une surface supérieure sensiblement plane du berceau, qui remonte pour venir se fixer en dessous d'un longeron latérale 40 de la caisse du véhicule. Les longerons 40 se trouvant assez haut, le bras de fixation 4 doit disposer d'une certaine hauteur pour rattraper cette différence de niveau.

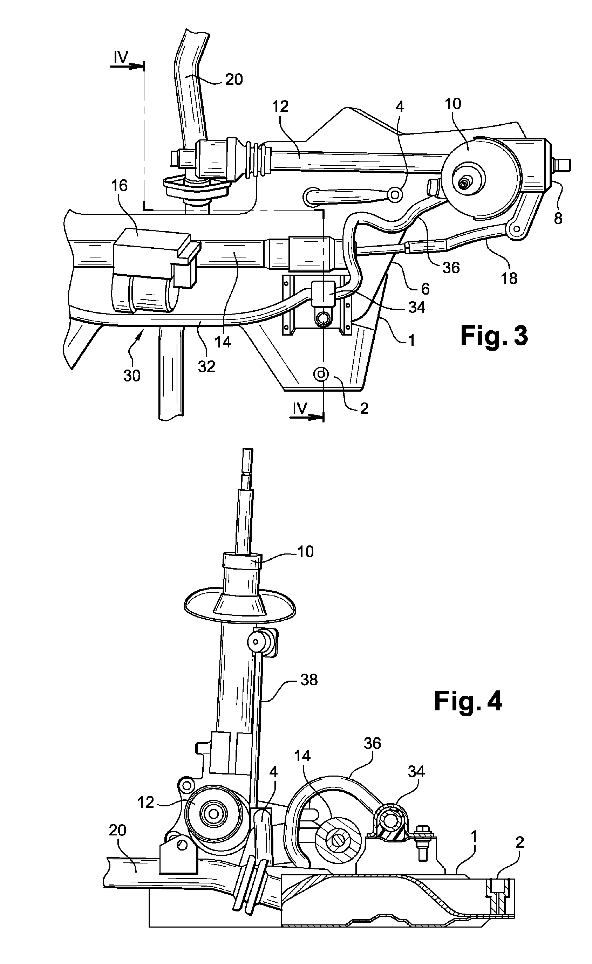

Les figures 3 et 4 présentent des vues détaillées du berceau 1 comportant des équipements. Le bras de fixation 4 du berceau 1 se trouve longitudinalement entre l'arbre de transmission 12 et la crémaillère de direction 14, le palier 34 de la barre anti-dévers se trouvant en arrière de cette crémaillère. On notera que la partie latérale 36 de la barre anti-dévers 30 forme une boucle importante, comportant différents rayons de courbures, pour contourner la crémaillère de direction 14 qui se trouve entre le palier 34 et l'extrémité de la biellette de liaison 38.

La boucle de la partie latérale 36 rend la barre anti-dévers 30 plus compliquée à réaliser, et augmente le poids et l'encombrement de cette barre. De plus les différents composants, l'arbre de transmission 12, le bras de fixation 4, l'extrémité 36 de la barre anti-dévers, la crémaillère 14, puis le palier 34 de la barre, sont disposés successivement les uns après les autres. L'ensemble présente suivant l'axe longitudinal, un encombrement important.

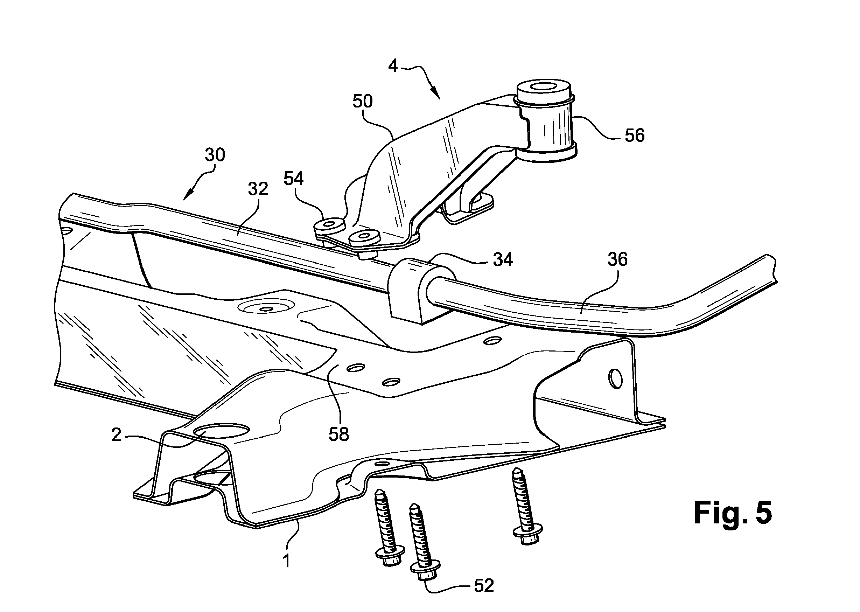

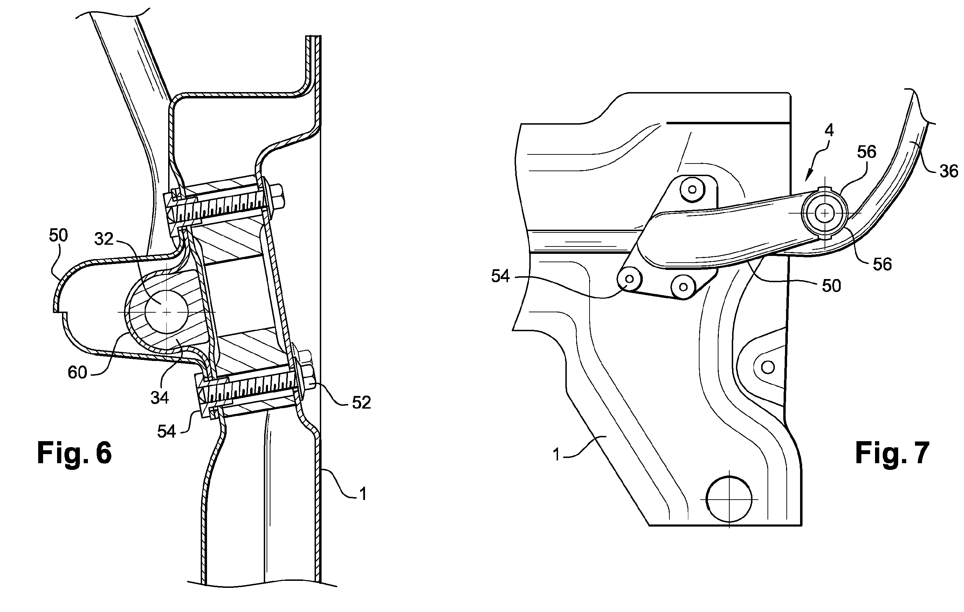

Les figures 5, 6 et 7 présentent un berceau 1 suivant l'invention, sur lequel est assemblé un bras de fixation avant 4 comportant une partie principale 50 en forme de corne, constituée de tôles embouties, dont la base forme un plan qui s'appuie sur une face supérieure plane 58 du berceau 1. Des vis de fixation 52 disposées sensiblement verticalement, viennent par en dessous du berceau et le traverse de part en part pour se visser dans des écrous 54 fixés sur la base plane du bras de fixation 4.

Le bras de fixation 4 comporte dans sa partie supérieure un cylindre 56 fixé à la partie principale 50, recevant suivant son axe vertical une vis venant par en dessous, qui le traverse de part en part pour se visser sous un longeron de la caisse du véhicule. Le cylindre 56 étant lié au berceau 1 par la partie principale 50 en tôles formées pour disposer d'une forte rigidité, et par les vis de fixation 52 réparties de part et d'autre de la barre anti-dévers 30, le berceau est ainsi solidement fixé à la caisse.

La barre anti-dévers 30 est entourée aux extrémités de sa partie centrale 32, par deux paliers 34 formant chacun une coquille comprenant un perçage transversal de guidage de cette barre, et dont le contour extérieur comporte une base plane d'appui sur le berceau 1, et une surface supérieure cintrée autour d'un axe correspondant à celui de la barre. Cette coquille est réalisée dans une matière moulée, résistant à l'usure due au frottement de la barre anti-dévers tournant dans son perçage.

La partie principale 50 du bras de fixation 4 comprend une tôle intérieure 60 comportant un cintrage qui s'ajuste sur la surface supérieure cintrée du palier 34, pour le maintenir et le serrer par sa base plane sur le berceau 4, lors du serrage des vis de fixation 52. On réalise ainsi une liaison stable à la fois du bras de fixation 4 et du palier 34 de la barre anti-dévers, sur le berceau 1 par les mêmes vis 52, ce qui représente un montage simple et économique.

On notera que l'axe transversal du bras de fixation 4, ainsi que celui de sa vis verticale de fixation sur la caisse, se trouve suivant une direction longitudinale sensiblement au même niveau que l'axe du palier 34 de la barre anti-dévers 30. La barre anti-dévers 30 traversant de part en part le bras de fixation 4, formant un tunnel de passage, on a une meilleure compacité de l'ensemble, contrairement à l'art antérieur où la barre anti-dévers doit passer à côté de ce bras.

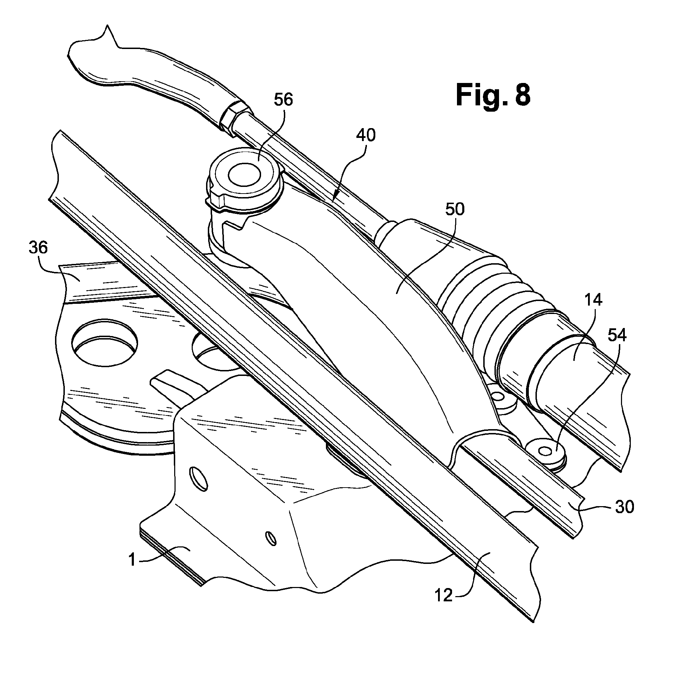

La figure 8 montre l'intégration du bras de fixation 4 suivant l'invention, dans son entourage. On notera que l'on peut disposer suivant une direction longitudinale, successivement en partant de l'avant, un arbre de transmission 12 d'entraînement de la roue avant, le bras de fixation 4 disposés sensiblement transversalement et contenant le palier 34 de la barre anti-dévers 30, qui traverse ce bras de part en part, et une crémaillère de direction 14 disposée juste derrière le bras. La compacité suivant cette direction, est élevée.

On notera que les parties latérales 36 de la barre anti-dévers 30, qui n'ont plus à contourner la crémaillère 14, peuvent être sensiblement droite et sont plus simples à réaliser.

Plus généralement, les bras de fixation peuvent être réalisés suivant d'autres procédés, par moulage ou forgeage par exemple.

Par ailleurs, le berceau 1 sans ses bras de fixation 4, a une forme globalement plate et peut être livré ainsi par l'atelier qui les fabrique, ces bras étant rapportés ensuite. La manipulation et le stockage des berceaux qui peuvent être facilement empilés, sont simplifiés, le transport est plus économique et les risques d'endommagement sont réduits.

## Revendications

1. - Berceau fixé à l'avant d'une caisse d'un véhicule automobile, supportant un groupe motopropulseur, des éléments de suspension (6,10) pour les roues avant du véhicule, et une barre anti-dévers (30) comportant une partie centrale (32) transversale formant une barre de torsion, fixée par ses extrémités au berceau (1) par des paliers (34), et des parties latérales (36) liées aux éléments de suspension des roues avant, le berceau étant relié à la caisse par des moyens de fixation arrière (2), et de chaque côté du berceau par deux moyens de fixation avant (4), chaque moyen de fixation avant (4) est rapporté sur la face supérieure du berceau, et forme une chape qui recouvre et bride un palier (34) de la barre anti-devers (30), **caractérisé en ce que** le moyen de fixation avant (4) possède une partie principale formant un bras (50) formé de tôles embouties.

2. - Berceau avant d'un véhicule automobile suivant la revendication 1, **caractérisé en ce que** le moyen de fixation avant (4) formant une chape, comporte des fixations (52) au berceau (1) réparties de part et d'autre de la barre anti-devers (30).

3. - Berceau avant d'un véhicule automobile suivant les revendication 1 ou 2, **caractérisé en ce que** le palier (34) comporte une coquille comprenant un perçage transversal de guidage de la barre anti-dévers (30), et dont le contour extérieur comporte une base plane d'appui sur le berceau (1), et une surface supérieure cintrée.

4. - Berceau avant d'un véhicule automobile suivant la revendication 3, **caractérisé en ce que** le bras (50), comprenant une base plane qui comporte deux zones réparties de part et d'autre de la barre anti-dévers et fixées sur une face supérieure (58) du berceau (1) par des vis de fixation (52), cette partie principale comprenant de plus un contour intérieur entre ces deux zones s'ajustant sur la surface supérieure cintrée du palier (34).

5. - Berceau avant d'un véhicule automobile suivant l'une quelconque des revendications précédentes, **caractérisé en ce que** le bras de fixation (50) comporte à son extrémité supérieure, une forme (56) recevant suivant un axe sensiblement vertical une vis de fixation sur la caisse du véhicule.

6. - Berceau avant d'un véhicule automobile suivant la revendication 5, **caractérisé en ce que** l'axe de la vis verticale de fixation sur la caisse se trouve suivant une direction longitudinale, sensiblement au même niveau que l'axe du palier (34) de la barre anti-dévers (30).

7. - Berceau avant d'un véhicule automobile suivant l'une quelconque des revendications précédentes, **caractérisé en ce que** on a longitudinalement, successivement en partant de l'avant, un arbre de transmission (12) lié à une roue avant, le bras de fixation (4) disposé sensiblement transversalement et contenant le palier (34) de la barre anti-dévers (30), et une crémaillère de direction (14) disposée juste derrière
